# EUROPEAN PATENT APPLICATION

(11) **EP 1 550 524 A1**
(43) Date of publication of application: **06.07.2005**
(21) Application number: 04257410.3
(22) Date of filing: 30.11.2004
(51) Int. Cl.: B23D 51/02

(54) **Reciprocating mechanism**

(30) Priority: 29.12.2003 CN 200320123658
(71) Applicant: Positec Power Tools (Suzhou) Co. Limited, Suzhou 215008 (CN)
(72) Inventor: Shuhua, Sang Posltec Power Tools, Suzhou 215006 (CN)
(74) Representative: Stuttard, Garry Philip

(57) **Abstract**

The present invention relates to a reciprocating mechanism for a power tool comprising a reciprocating rod (400) driven by a drive mechanism and a fixed elongate carrier member (310) arranged to be slidably retained at least partially in or on the reciprocating rod (400). The carrier member (310) permits intimate coupling of the drive mechanism and the reciprocating rod (400) (and therefore lateral compactness) without compromising the effectiveness of the reciprocative action.

## Description

The present invention relates to a reciprocating mechanism for a power tool.

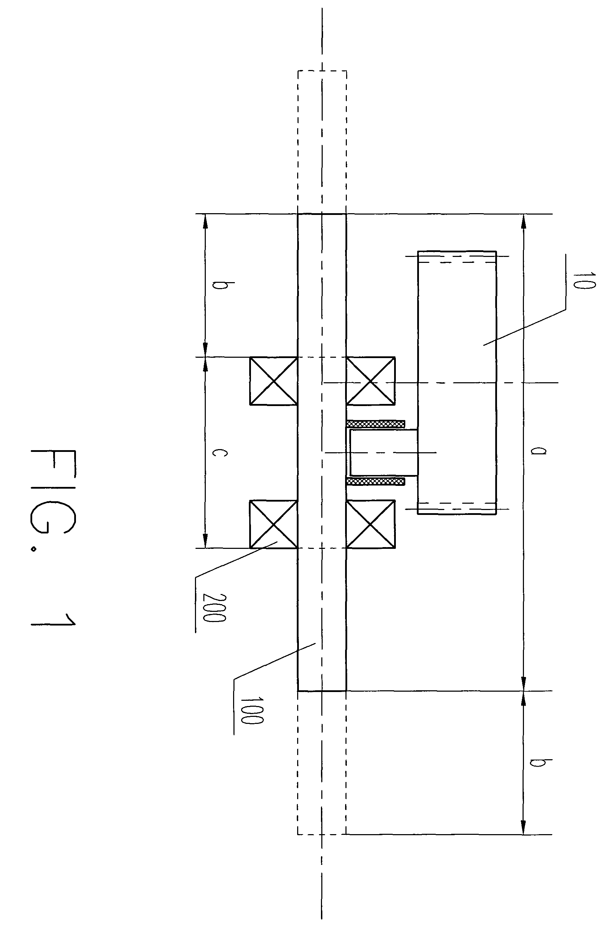

Referring to Fig. 1, the prior art discloses a reciprocating mechanism for a power tool comprising a drive mechanism 10, a reciprocating shaft 100 driven by the drive mechanism 10 and support bearings 200 mounted on each face of the reciprocating shaft 100. The length of the reciprocating shaft 100 is "a" and the length of the reciprocative movement is "b". The bearings 200 must be positioned within the middle section "c" of the reciprocating shaft 100 (where "c" = "a"- "2b") otherwise the reciprocating shaft 100 will disengage the bearings 200 during reciprocation. However, if the bearings 200 are too close to the middle of the reciprocating shaft 100, they will interfere with the drive mechanism 10. Alternatively, increasing the distance between the two bearings 200 will lead to a need for the reciprocating shaft 100 to be lengthened to avoid the bearings 200 dismounting during reciprocation. This will increase the overall size of the power tool which is not desirable.

The present invention seeks to overcome certain disadvantages of the prior art by providing a compact (in particular a laterally compact) reciprocating mechanism which performs effective reciprocating movement.

Thus viewed from one aspect the present invention provides a reciprocating mechanism for a power tool comprising:
a reciprocating rod including an elongate retaining portion;
a drive mechanism arranged to drive the reciprocating rod;
a coupling mounted on the reciprocating rod for intimately coupling the drive mechanism and the reciprocating rod; and
a carrier assembly including:
   a fixed elongate carrier member arranged to be slidably retained at least partially in or on the elongate retaining portion and
   a fixing block for fixing the elongate carrier member.

The present invention exploits a carrier assembly in place of bearings which permits intimate coupling of the drive mechanism and the reciprocating rod (and therefore lateral compactness) without compromising the effectiveness of the reciprocative action.

Preferably the elongate retaining portion is an elongate retaining channel and the elongate carrier member is arranged to be slidably retained at least partially in the elongate retaining channel.

Preferably the elongate carrier member is circularly columnar and the elongate retaining portion is a hollow guide bore and the elongate carrier member is arranged to be slidably retained at least partially in the hollow guide bore.

Preferably the coupling is mounted tangentially on the reciprocating rod.

Preferably the coupling is mounted transversely on the reciprocating rod.

Preferably the coupling is an elongate U-shaped coupling.

Preferably the coupling is mounted perpendicular to the axis of the reciprocating rod.

Preferably the fixing block is a terminal fixing block.

In a preferred embodiment, the reciprocating mechanism further comprises: a pin for penetrating the fixing block to fix the carrier assembly on a part of the power tool.

In a preferred embodiment, the reciprocating mechanism further comprises: a holding rack in the form of a U-shaped channel. Preferably the holding rack includes:
an elongate base terminating proximally in a positioning portion
a first side portion extending conterminously from a first longitudinal edge of the elongate base and
a second side portion extending conterminously from a second longitudinal edge of the elongate base,
wherein each of the first and second side portion extends into a platform rim.

Preferably the platform rim is arranged to seat the coupling.

The first and second side portion may be divergent.

In a preferred embodiment, the reciprocating mechanism further comprises: a pin for penetrating the fixing block to fix the carrier assembly on a part of the power tool and for penetrating the positioning portion so as to securely nest the carrier assembly within the holding rack.

Preferably the fixing block has a first hole and the positioning portion has a second hole, wherein the first hole and the second hole are coincident to receive the pin.

Preferably the drive mechanism includes a gear wheel with an eccentric axle bearing a sleeve, wherein the gear wheel is connected to the coupling via the sleeve. Preferably the gear wheel is transversely mounted.

Viewed from a further aspect the present invention provides a power tool comprising:
a shell;
a reciprocating mechanism as defined hereinbefore housed in the shell,
wherein the elongate carrier member is fixed to the shell.

In a preferred embodiment, the power tool further comprises:
a saw blade which extends exteriorly to the shell and
a connecting device which connects the saw blade to the reciprocating mechanism to enable the saw blade to follow the movement of the reciprocating rod.

Viewed from a yet further aspect the present invention provides a reciprocating mechanism for a power tool comprising:
a driving mechanism;
a rail set comprising rail portion and a fixing portion; and
a reciprocating rod comprising a guide channel for receiving the rail portion of the rail set and a connect portion for connecting to the driving mechanism.

Viewed from an even yet further aspect the present invention provides a power tool comprising:
a shell;
a driving mechanism; and
a reciprocating mechanism comprising:
   a carrier assembly comprising a carrier portion and a fixing portion for engaging with the shell;
   a reciprocating rod comprising a guide channel for receiving the carrier portion of the carrier assembly and a connect portion for connecting to the driving mechanism.

The reciprocating mechanism in accordance with the present invention may be used in a power tool. Preferably the power tool is a jigsaw or a reciprocating saw.

The present invention will now be described in a non-limitative sense with reference to accompanying Figures 2 to 4 in which:
Fig. 2 shows a perspective exploded view of the reciprocating mechanism in accordance with an embodiment of the present invention;
Fig. 3 shows a front view of the reciprocating mechanism in accordance with an embodiment of the present invention; and
Fig. 4 shows a cross-sectional view of the reciprocating mechanism in accordance with an embodiment of the present invention.

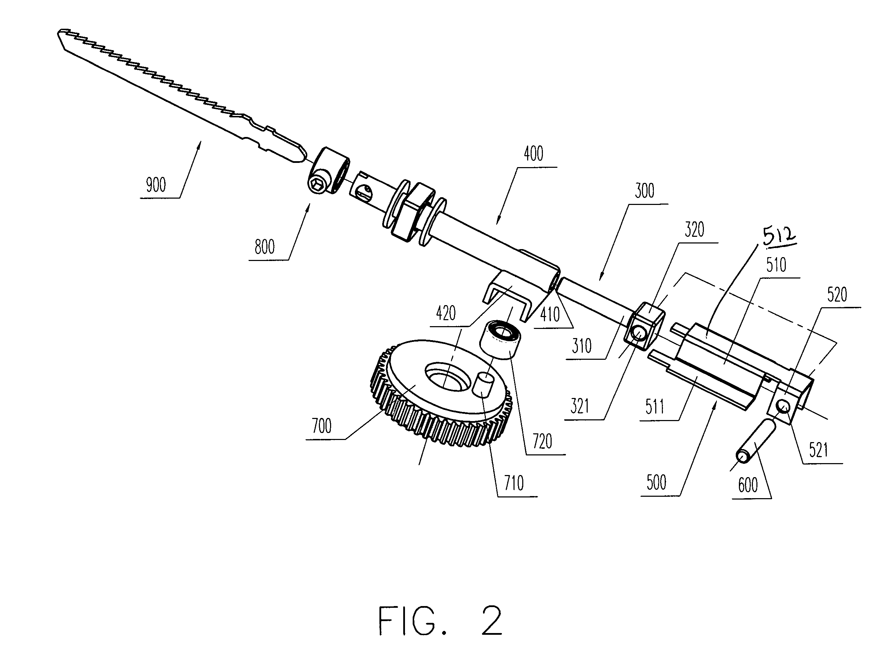

Figures 2 to 4 illustrate a jigsaw which comprises generally a shell 1, a reciprocating mechanism in accordance with an embodiment of the invention which is housed within the shell 1 and a saw blade 900 which extends exteriorly to the shell 1. The reciprocating mechanism comprises generally a carrier assembly 300, a reciprocating rod 400, a holding rack 500, a pin 600 for fixing the carrier assembly 300 and the holding rack 500 to the shell 1 and a drive mechanism. A connecting device 800 connects the saw blade 900 to the reciprocating mechanism to enable the saw blade 900 to follow the movement of the reciprocating rod 400 (described below).

The drive mechanism comprises a transverse gear wheel 700 with an eccentric axle 710 disposed on one face and a sleeve 720 mounted on the eccentric axle 710.

The carrier assembly 300 comprises an elongate carrier member 310 which is circularly columnar and a terminal fixing block 320 which defines a first hole 321 for receiving the pin 600.

The reciprocating rod 400 defines a hollow guide bore 410 for freely receiving the carrier member 310 so as to guide the reciprocating rod 400 during reciprocative movement. Mounted tangentially on the reciprocating rod 400 substantially perpendicular to the direction of reciprocation is an elongate U-shaped coupling 420 which serves to couple the reciprocating rod 400 with the sleeve 720.

The holding rack 500 is an elongate U-shaped channel comprising an elongate base 512 terminating proximally in a positioning portion 520 and two divergent side portions 510 extending conterminously from the longitudinal edges of the elongate base 512. Each side portion 510 extends into a platform rim 511. The positioning portion 520 defines a second hole 521 for receiving the pin 600.

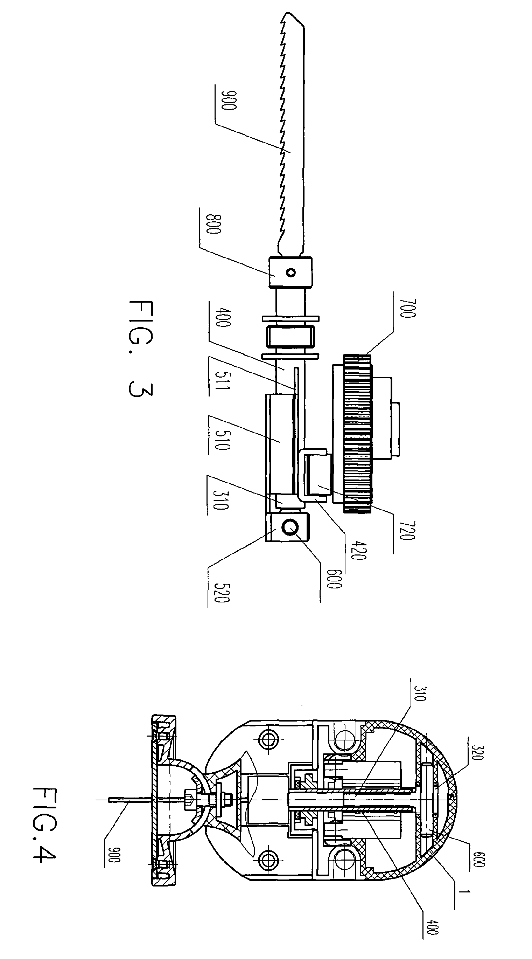

Referring to the reciprocating mechanism in assembled form illustrated in Figs. 3 and 4, the pin 600 penetrates the first hole 321 and the second hole 521 and is fastened on the shell 1 to securely nest the carrier assembly 300 within the elongate U-shaped channel of the holding rack 500. Concomitantly, the elongate U-shaped coupling 420 is seated on each platform rim 511.

When the gear wheel 700 is powered by a rotary motor (not shown), the reciprocating rod 400 is driven reciprocatively (ie to-and-fro) causing the saw blade 900 to undergo a to-and-fro cutting action.

## Claims

1. A reciprocating mechanism for a power tool comprising:
a reciprocating rod (400) including an elongate retaining portion (410);
a drive mechanism arranged to drive the reciprocating rod (400);
a coupling (420) mounted on the reciprocating rod (400) for intimately coupling the drive mechanism and the reciprocating rod (400); and
a carrier assembly (300) including:
a fixed elongate carrier member (310) arranged to be slidably retained at least partially in or on the elongate retaining portion (410) and
a fixing block (320) for fixing the elongate carrier member (310).

2. A reciprocating mechanism as claimed in claim 1 wherein the elongate retaining portion (410) is an elongate retaining channel and the elongate carrier member (310) is arranged to be slidably retained at least partially in the elongate retaining channel.

3. A reciprocating mechanism as claimed in claim 1 or 2 wherein the elongate carrier member (310) is circularly columnar and the elongate retaining portion (410) is a hollow guide bore and the elongate carrier member (310) is arranged to be slidably retained at least partially in the hollow guide bore.

4. A reciprocating mechanism as claimed in any preceding claim wherein the coupling (420) is mounted tangentially on the reciprocating rod (400).

5. A reciprocating mechanism as claimed in any preceding claim wherein the coupling (420) is mounted transversely on the reciprocating rod (400).

6. A reciprocating mechanism as claimed in any preceding claim wherein the coupling (420) is an elongate U-shaped coupling.

7. A reciprocating mechanism as claimed in any preceding claim wherein the coupling (420) is mounted perpendicular to the axis of the reciprocating rod (400).

8. A reciprocating mechanism as claimed in any preceding claim, wherein the fixing block (320) is a terminal fixing block.

9. A reciprocating mechanism as claimed in any preceding claim further comprising:
a pin (600) for penetrating the fixing block (320) to fix the carrier assembly (300) on a part of the power tool.

10. A reciprocating mechanism as claimed in any preceding claim further comprising:
a holding rack (500) including:
an elongate base (512) terminating proximally in a positioning portion (520)
a first side portion (510) extending conterminously from a first longitudinal edge of the elongate base (512) and
a second side portion (510) extending conterminously from a second longitudinal edge of the elongate base (512),
wherein each of the first and second side portion (510) extends into a platform rim (511).

11. A reciprocating mechanism as claimed in claim 10 wherein the platform rim (511) is arranged to seat the coupling (420).

12. A reciprocating mechanism as claimed in claim 10 or 11 further comprising:
a pin (600) for penetrating the fixing block (320) to fix the carrier assembly (300) on a part of the power tool and for penetrating the positioning portion (520) so as to securely nest the carrier assembly (300) within the holding rack (500).

13. A reciprocating mechanism as claimed in claim 12 wherein the fixing block (320) has a first hole (321) and the positioning portion has a second hole (521), wherein the first hole (321) and the second hole (521) are coincident to receive the pin (600).

14. A reciprocating mechanism as claimed in any preceding claim, wherein the drive mechanism includes a gear wheel (700) with an eccentric axle (710) bearing a sleeve (720), wherein the gear wheel (700) is connected to the coupling (420) via the sleeve (720).

15. A power tool comprising:
a shell (1);
a reciprocating mechanism as defined in any preceding claim housed in the shell (1), wherein the elongate carrier member (310) is fixed to the shell (1).

16. A power tool as claimed in claim 15 further comprising:
a saw blade (900) which extends exteriorly to the shell (1) and
a connecting device (800) which connects the saw blade (900) to the reciprocating mechanism to enable the saw blade (900) to follow the movement of the reciprocating rod (400).
